# EUROPÄISCHE PATENTSCHRIFT

(11) **EP 0 550 819 B1**
(45) Veröffentlichungstag und Bekanntmachung des Hinweises auf die Patenterteilung: **08.03.1995**
(21) Anmeldenummer: 92119658.0
(22) Anmeldetag: 19.11.1992
(51) Int. Cl.: C03C 17/34

(54) **Mit Keramikfarbe dekorierter Artikel aus Glaskeramik, insbesondere Glaskeramikscheibe sowie Verfahren zum Entfernen der Haloisierung bei mit Keramikfarbe dekorierten Glaskeramikartikeln**
Glass ceramic article decorated with coloured ceramic paint, in particular glass ceramic sheet and method to remove vague contours from glass ceramic articles decorated with coloured ceramic paint
Article vitro céramique décoré avec une composition colorante céramique, en particulier une feuille vitro céramique, et procédé d'élimination des contours vagues d'articles vitro céramiques décorés avec une composition colorante céramique

(30) Priorität: 10.01.1992 DE 4200449
(43) Veröffentlichungstag der Anmeldung: 14.07.1993
(73) Patentinhaber: Schott Glaswerke, 55122 Mainz (DE); Carl-Zeiss-Stiftung trading as SCHOTT GLASWERKE, 55122 Mainz (DE)
(72) Erfinder: Leroux, Roland, Dr., W-6501 Stadecken-Elsheim 2 (DE); Rodek, Erich, Dr., W-6500 Mainz 21 (DE); Schaupert, Kurt, Dr., W-6238 Hofheim-Wallau (DE); Thürk, Jürgen, Dr., W-6509 Schornsheim (DE); Weinberg, Waldemar, Dr., W-6531 Seibersbach (DE)

(56) Entgegenhaltungen:
- DE-A- 1 912 938
- DE-A- 3 936 654
- US-A- 4 264 679
- CHEMICAL ABSTRACTS, vol. 87, 1977, Columbus, Ohio, US; abstract no. 121771g,Seite 261 ; & VITREOUS ENAMELLER Bd. 27, Nr. 1, 1976, ENGLAND Seiten 19-23 R.L. STEVENS ET AL. 'SURFACE TREATMENT FOR THE IMPROVEMENT OF VITREOUS ENAMEL COATINGS'
- DATABASE WPIL Week 10, Derwent Publications Ltd., London, GB; AN 81-16332D & JP-A-55 167 191 (NIPPON SHASHIN INSA) 27. Dezember 1980

## Beschreibung

Gegenstand der Erfindung ist eine mit Keramikfarbe dekorierter Artikel aus Glaskeramik, insbesondere eine Glaskeramikscheibe sowie ein Verfahren zum Entfernen der Haloisierung bei mit Keramikfarbe dekorierten Glaskeramikartikeln.

Glaskeramikartikel finden vielfache Verwendung, z.B. als temperaturwechselfestes (feuerfestes) Küchengeschirr und insbesondere auch als Kochflächen für Küchenherde. Diese Artikel sind im allgemeinen mit Dekoren versehen, sei es aus rein optischen Gründen oder um z.B. bei Kochflächen die Kochstellen zu markieren. Als Farben für die Dekore werden Keramikfarben auf Emailbasis verwendet, die nach konventionellen Techniken, wie z.B. Siebdruck oder mittels der Abziehbildtechnik aufgebracht und anschließend eingebrannt werden (DE-OS 34 33 880; DE-PS 35 05 922; DE-PS 36 00 109). Glaskeramik wird bekanntlich aus einem keramisierbaren Glas durch eine Wärmebehandlung nach einem bestimmten Temperatur-Zeit-Programm (Keramisierung) erzeugt, wobei Temperaturen bis zu ca. 1.100°C erreicht werden. Aus produktionstechnischen Gründen und zum Zwecke der Energieeinsparung wird angestrebt, das Einbrennen der Dekorfarben gleichzeitig mit der Keramisierung vorzunehmen, obwohl die Keramisierungstemperaturen gegenüber den üblichen Einbrenntemperaturen ungewöhnlich hoch liegen (DE-PS 35 05 922).

Aufgrund der hohen Einbrenntemperaturen sind zahlreiche Keramikfarben zur Dekorierung nicht geeignet. Bei den verbleibenden Farben kommt es mitunter zur Haloisierung, d.h. zur Hofbildung in Form von verlaufenden unscharfen Konturen des eingebrannten Dekors. Haloisierte Glaskeramikartikel können bei hohen Qualitätsanforderungen nicht benutzt werden und sind Ausschuß.

Aus der DE 39 36 654 C1 ist ein Verfahren zur Herstellung eines dekorierten Glaskeramikartikels bekannt, bei dem das Auftreten der Haloisierung vermieden wird. Dieses Verfahren besteht darin, auf der Oberfläche des zu dekorierenden Glaskeramikartikels vor dem Dekorieren eine Zwischenschicht aus SiO₂ anzuordnen. Das Dekor wird auf die Zwischenschicht aufgedruckt und zeigt keinerlei Neigung mehr zur Hofbildung. Obwohl sich mit diesem Verfahren die Hofbildung sicher vermeiden läßt, haften ihm jedoch noch geringe Nachteile an. So müssen nämlich sämtliche zu dekorierenden Glaskeramikartikel vor der Dekoration mit der SiO₂-Schicht überzogen werden, obwohl die Hofbildung, auch bei Verwendung derselben Farben, nur sporadisch auftritt.

Die Aufgabe der Erfindung besteht darin, ein Verfahren zu finden, bei dem nicht mehr die gesamte Produktion einer Behandlung unterzogen werden muß, sondern bei dem sich eine Behandlung auf die Artikel beschränken kann, bei denen tatsächlich eine Haloisierung aufgetreten ist.

Diese Aufgabe wird durch das in Patentanspruch 1 beschriebene Verfahren gelöst. Ein entsprechender Glaskeramikartikel wird im Patentanspruch 10 beschrieben.

Es konnte gefunden werden, daß sich eine auf dekorierten Glaskeramikartikeln aufgetretene Haloisierung entfernen bzw. rückgängig machen läßt, wenn man den fertigen, durch die Hofbildung verunstalteten Artikel mit einer SiO₂-Schicht überzieht. Die Schicht wird zweckmäßigerweise in einer Stärke von 40-200 nm aufgebracht. In dieser Stärke beeinträchtigt die SiO₂-Schicht nicht die Gebrauchseigenschaften des Glaskeramikartikels. Liegt die Schichtdicke unter 20 nm, so kann in manchen Fällen die gewünschte Wirkung ausbleiben; überschreitet man eine Schichtdicke von 200 nm, so kann es zu Abplatzungen der Schicht kommen. Besonders geeignet sind Schichtdicken zwischen 60 und 80 nm, weil sie in ausreichendem Maße die Haloisierung rückgängig machen. Schichten aus reinem SiO₂ sind je nach der Brechzahldifferenz zwischen SiO₂ und Glaskeramik mehr oder weniger gut sichtbar. Dieser Effekt kann zur Erzielung besonderer optischer Wirkungen erwünscht sein. Falls diese Wirkung jedoch unerwünscht ist und man Wert darauf legt, daß die SiO₂-Schicht unsichtbar bleibt, so kann man das durch den Einbau von brechwertändernden Oxiden in die SiO₂-Schicht erreichen. Als den brechwertändernde Oxide geeignet sind z.B. TiO₂, ZrO₂, SnO₂, MgO, Al₂O₃ oder Mischungen davon. Diese Oxide werden in solchen Mengen in die SiO₂-Schicht eingelagert, das der Brechungsindex der SiO₂-Schicht dem gewünschten Wert entspricht, d.h. im allgemeinen dem der Glaskeramik angenähert wird oder gleich ist. Der Anteil der den Brechwert ändernden Oxide kann bis zu 66,5 Gew.-% betragen, bezogen auf den Gesamtoxidgehalt der Schicht. Bei den heute üblichen Glaskeramik-Sorten reichen im allgemeinen Zugaben dieser dem Brechwert ändernden Oxide von bis zu 50 Gew.-%, insbesondere bis zu 15 Gew.-% aus. Besonders geeignet als Brechwert änderndes Oxid ist TiO₂, was bevorzugt in Mengen von etwa 7-15, insbesondere 11 Gew.-% in der SiO₂-Schicht enthalten ist. Wenn im folgenden von der SiO₂-Schicht die Rede ist, ist auch immer eine SiO₂-Schicht eingeschlossen, die den Brechwert ändernde Oxide enthält.

Das Aufbringen der SiO₂-Schicht kann nach beliebigem Verfahren erfolgen, z.B. durch Aufdampfen, Sputtern, Bedrucken oder durch geeignete CVD-(Chemical vapour deposition)- verfahren.

Besonders günstig ist jedoch die Herstellung der SiO₂-Schicht nach dem an sich bekannten Sol-Gel-Verfahren. Das Sol-Gel-Verfahren ist z.B. für Flachglas ausführlich beschrieben in "Sol-Gel-Technology for thin films, fibers, preforms, electronics and specialty shapes", edited by LISA C. Klein, Noyes Publ. 1988, chapter four: Helmut Dislich, thin films from the Sol-Gel process, Seiten 50-79. Bei dem Sol-Gel-Verfahren wird auf die Oberfläche des zu beschichtenden Gegenstandes eine dünne Schicht eines oder mehrerer Kieselsäureester aufgetragen. Diese Schicht hydrolysiert an der Luft zu einem Gel, das gegebenenfalls nach einer kurzen Trocknung, gegebenenfalls unter leichter Erwärmung, bei Temperaturen von 400 bis 650°C in eine massive SiO₂-Schicht überführt wird. Die Kieselsäureester kommen im allgemeinen in Form einer geeigneten Lösung, z.B. in Ethanol zur Anwendung, wobei die Lösung auch noch die zur Brechwertänderung erforderlichen Metalloxide in Form von Alkoxiden oder anderer hydrolisierbarer Verbindungen enthält. Die für die Veresterung und Alkoxidbildung sowie als Lösemittel geeigneten Alkohole sind insbesondere Methanol, Ethanol, n- und i-Propanol sowie wie Butanol. Als Lösemittel wird Ethanol aufgrund seiner Ungiftigkeit bevorzugt, es können aber auch alle anderen Lösemittel Verwendung finden, sofern die Ester bzw. Alkoxide in ihnen löslich sind. Die Verdünnung der Ester durch das Lösemittel erleichtert die Einstellung der gewünschten Schichtdicke der späteren SiO₂-Schicht. Die geeignete Konzentration an Estern in dem Lösemittel kann durch wenige Versuche leicht ermittelt werden, sie liegt im allgemeinen zwischen 1 und 30 Gew.-%, berechnet als Oxid. Neben den Estern können auch noch Anteile an teilweise oder ganz hydrolysierten Estern in Sol-Form in dem Lösemittel vorliegen, ohne daß sich das auf das Verfahren störend auswirkt.

Nach dem Erzeugen der SiO₂-Schicht auf den Glaskeramikartikel ist die Hofbildung verschwunden und es liegt ein Glaskeramikartikel vor, auf dem keine Hofbildung erkennbar ist und dessen Oberfläche einen Überzug aus SiO₂ trägt.

Die mit der Erfindung erzielbaren Vorteile liegen vor allem darin, daß mit Keramikfarbe überzogene Gegenstände aus Glaskeramik, bei denen Haloisierung (Hofbildung) aufgetreten ist, in einwandfreie Artikel überführt werden können und somit eine Erhöhung der Produktivität bei geringerer Ausschußquote erreicht wird. Auch ist es durch das neue Verfahren möglich, eine wesentlich größere Vielfalt an Keramikfarben einzusetzen, als dies bisher möglich war, darunter auch solche, die in erhöhtem Maße zur Haloisierung neigen. Andere wichtige Gebrauchseigenschaften der fertigen Glaskeramik wie chemische Resistenz oder Abriebfestigkeit werden im allgemeinen positiv beeinflußt. Es konnte in keinem Fall eine Verschlechterung dieser Eigenschaften festgestellt werden.

Im nachfolgenden Beispiel wird die Erfindung anhand einer nach dem Sol-Gel-Verfahren hergestellten SiO₂-Schicht erläutert:

### Beispiel:

Es wurde eine 4 mm dicke Scheibe aus Glaskeramik der Zusammensetzung (in Ges.-% auf Oxidbasis) von: SiO₂ 64; Al₂O₃ 21,3; Li₂O 3,5; Na₂O 0,6; K₂O 0,5; BaO 2,5; CaO 0,2; MgO 0,1; ZnO 1,5; TiO₂ 2,3; ZrO₂ 1,6; MnO₂ 0,65; Fg₂O₃ 0,23; CoO 0,37; NiO 0,06 und Sb₂O₃ 0,85 eingesetzt, die mit einer handelsüblichen Keramikfarbe auf der Basis Bleiborat im Siebdruckverfahren dekoriert war. Die Dekoration bestand aus einem Punktmuster, bei dem jeder Punkt einen Durchmesser von ca. 1 mm besaß. Die Konturen der einzelnen Punkte waren nicht scharf begrenzt, sondern durch Hofbildung (Haloisierung) verschwommen, so daß sich ein ästethisch nicht ansprechendes Bild ergab.

Die Scheibe wurde in eine (als Metalloxid gerechnet) 2 Gew.-%-ige Lösung aus 89 Gew.-% SiO₂ in Form von Si (OC₂H₅)₄ und 11 Gew.-% TiO₂ in Form von Ti (OC₂H₅)₄ (zur Brechwertanpassung) in Ethanol getaucht. Nach dem Auftauchen und Abtropfen wurde die Scheibe 5 Minuten bei 50°C getrocknet und anschließend 15 Minuten bei 400°C eingebrannt.

Das aufgebrachte Dekormuster zeigte nach dem Abkühlen der Scheibe eine scharfe Kontur. Die übrigen Gebrauchseigenschaften der Scheibe waren unverändert gut. Die Stärke der SiO₂/TiO₂-Schicht betrug 65 nm.

## Patentansprüche

1. Verfahren zum Entfernen der Haloisierung auf mit Keramikfarbe dekorierten Glaskeramikartikeln, insbesondere Glaskeramikscheiben
**dadurch gekennzeichnet,**
daß auf den Glaskeramikartikel nach dem Einbrennen der Glaskeramikfarbe eine SiO₂-Schicht aufgebracht wird.

2. Verfahren nach Anspruch 1,
**dadurch gekennzeichnet,**
daß eine 40 bis 200 nm dicke SiO₂-Schicht aufgebracht wird.

3. Verfahren nach den Ansprüchen 1 oder 2,
**dadurch gekennzeichnet,**
daß eine SiO₂-Schicht, die bis zu 66,5 Gew.-% an den Brechwert ändernden Oxiden enthält, aufgebracht wird.

4. Verfahren nach Anspruch 3,
**dadurch gekennzeichnet,**
daß eine bis zu 15 Gew.-% brechwertändernde Oxide enthaltende Schicht aufgebracht wird.

5. Verfahren nach den Ansprüchen 3 oder 4,
**dadurch gekennzeichnet,**
daß eine TiO₂, ZrO₂, SnO₂, Al₂O₃, MgO oder Mischungen davon enthaltende Schicht aufgebracht wird.

6. Verfahren nach wenigstens einem der Ansprüche 1 bis 5,
**dadurch gekennzeichnet,**
daß eine Schicht aus 85 - 93 Gew.-% SiO₂ und 7 bis 15 Gew.-% TiO₂ aufgebracht wird.

7. Verfahren nach wenigstens einem der Ansprüche 1 bis 6,
**dadurch gekennzeichnet,**
daß die SiO₂-Schicht nach dem an sich bekannten Tauchverfahren durch Eintauchen des Artikels in oder Besprühen des Artikels mit einer Lösung eines oder mehrerer Kieselsäureester, anschließender Hydrolyse, Trocknen und Einbrennen aufgebracht wird.

8. Verfahren nach Anspruch 7,
**dadurch gekennzeichnet,**
daß das Einbrennen der SiO₂-Schicht bei Temperaturen von 400 bis 650°C vorgenommen wird.

9. Verfahren nach Anspruch 7,
**dadurch gekennzeichnet,**
daß man eine Lösung, die die brechwertändernden Oxide in Form von hydrolysierbaren Alkoxiden enthält, verwendet.

10. Mit Keramikfarbe dekorierter Artikel aus Glaskeramik, insbesondere Glaskeramikscheibe,
**gekennzeichnet durch**
einen Überzug aus SiO₂.

11. Artikel nach Anspruch 10,
**dadurch gekennzeichnet,**
daß der Überzug 40 bis 200 nm dick ist.

12. Artikel nach den Ansprüchen 10 oder 11,
**dadurch gekennzeichnet,**
daß der Überzug neben SiO₂ bis zu 66,5 Gew.-% an brechwertändernden Oxiden enthält.

13. Artikel nach Anspruch 12,
**dadurch gekennzeichnet,**
daß der Gehalt an brechwertändernden Oxiden in dem Überzug bis zu 15 Gew.-% enthält.

14. Artikel nach wenigstens einem der Ansprüche 10 bis 13,
**dadurch gekennzeichnet,**
daß der Überzug als brechwertändernde Oxide TiO₂, ZrO₂, SnO₂, Al₂O₃, MgO oder Mischungen davon enthält.

15. Artikel nach wenigstens einem der Ansprüche 10 bis 14,
**dadurch gekennzeichnet,**
daß der Überzug aus 85 - 93 Gew.-% SiO₂ und 7 - 15 Gew.-% TiO₂ besteht.

## Claims

1. Process for the removal of the halo formed on glass ceramic articles decorated with ceramic paint, in particular glass ceramic sheets, characterised in that a SiO₂ film is applied to the glass ceramic article after stoving of the glass ceramic paint.

2. Process according to Claim 1, characterised in that a SiO₂ film 40 to 200 nm thick is applied.

3. Process according to Claim 1 or 2, characterised in that a SiO₂ film is applied which contains up to 66.5 wt-% of oxides which modify the refractive index.

4. Process according to Claim 3, characterised in that a film is applied which contains up to 15 wt-% of oxides which modify the refractive index.

5. Process according to Claim 3 or 4, characterised in that a film containing TiO₂, ZrO₂, SnO₂, Al₂O₃, MgO or mixtures thereof is applied.

6. Process according to at least one of Claims 1 to 5, characterised in that a film of 85 to 93 wt-% SiO₂ and 7 to 15 wt-% TiO₂ is applied.

7. Process according to at least one of Claims 1 to 6, characterised in that the SiO₂ film is applied by the dipping process, known per se, by immersing the article in or spraying the article with a solution of one or more silicic acid esters, followed by hydrolysis, drying and stoving.

8. Process according to Claim 7, characterised in that the SiO₂ film is stoved at temperatures of 400 to 650°C.

9. Process according to Claim 7, characterised in that a solution containing the oxides which modify the refractive index in the form of hydrolysable alkoxides is used.

10. Glass ceramic article decorated with ceramic paint, in particular glass ceramic sheet, characterised by a SiO₂ coating.

11. Article according to Claim 10, characterised in that the coating is 40 to 200 nm thick.

12. Article according to Claim 10 or 11, characterised in that the coating contains in addition to SiO₂ up to 66.5 wt-% of oxides which modify the refractive index.

13. Article according to Claim 12, characterised in that the the coating contains up to 15 wt-% of oxides which modify the refractive index.

14. Article according to at least one of Claims 10 to 13, characterised in that the coating contains TiO₂, ZrO₂, SnO₂, Al₂O₃, MgO or mixtures thereof as oxides which modify the refractive index.

15. Article according to at least one of Claims 10 to 14, characterised in that the coating comprises 85 to 93 wt-% SiO₂ and 7 to 15 wt-% TiO₂.

## Revendications

1. Procédé pour éliminer l'effet de halot sur des articles en vitro-céramique décorés à l'aide d'un pigment coloré pour céramique, notamment sur des plaques en vitro-céramique, caractérisé par le fait que, après cuisson du pigment coloré pour céramique, on applique une couche de SiO₂ sur l'article en vitro-céramique.

2. Procédé selon la revendication 1, caractérisé par le fait que l'on applique une couche de SiO₂ dont l'épaisseur est comprise entre 40 et 200 nm.

3. Procédé selon la revendication 1 ou la revendication 2, caractérisé par le fait que l'on applique une couche de SiO₂ qui contient jusqu'à 66,5% en poids d'oxydes modifiant l'indice de réfraction.

4. Procédé selon la revendication 3, caractérisé par le fait que l'on applique une couche qui contient jusqu'à 15% en poids d'oxydes modifiant l'indice de réfraction.

5. Procédé selon la revendication 3 ou la revendication 4, caractérisé par le fait que l'on applique une couche contenant du TiO₂, du ZrO₂, du SnO₂, de l'Al₂O₃, du MgO ou des mélanges de ces corps.

6. Procédé selon au moins l'une des revendication 1 à 5, caractérisé par le fait que l'on applique une couche contenant 85 - 93% en poids de SiO₂ et 7 - 15% en poids de TiO₂.

7. Procédé selon au moins l'une des revendication 1 à 6, caractérisé par le fait que l'on applique la couche de SiO₂ selon un procédé au trempé connu, par immersion de l'article dans ou par pulvérisation sur l'article d'une solution d'un ou plusieurs esters d'acide silicique, suivie d'une hydrolyse, d'un séchage et d'une cuisson.

8. Procédé selon la revendication 7, caractérisé par le fait que l'on procède à la cuisson de la couche de SiO₂ à des températures comprises entre 400 et 650 °C.

9. Procédé selon la revendication 7, caractérisé par le fait que l'on utilise une solution dans laquelle les oxydes modifiant l'indice de réfraction sont présents sous forme d'alcoxydes hydrolysables.

10. Article en vitro-céramique, notamment plaque en vitro-céramique, décoré à l'aide d'un pigment coloré pour céramique, caractérisé par une couche de SiO₂.

11. Article en vitro-céramique selon la revendication 10, caractérisé par le fait que la couche a une épaisseur comprise entre 40 et 200 nm.

12. Article en vitro-céramique selon les revendications 10 et 11, caractérisé par le fait que la couche contient, en plus du SiO₂, jusqu'à 66,5% en poids d'oxydes modifiant l'indice de réfraction.

13. Article en vitro-céramique selon la revendication 12, caractérisé par le fait que la proportion d'oxydes modifiant l'indice de réfraction dans la couche va jusqu'à 15% en poids.

14. Article en vitro-céramique selon au moins l'une des revendications 10 à 13, caractérisé par le fait que la couche contient comme oxydes modifiant l'indice de réfraction, du TiO₂, du ZrO₂, du SnO₂, de l'Al₂O₃, du MgO ou des mélanges de ces corps.

15. Article en vitro-céramique selon au moins l'une des revendications 10 à 14, caractérisé par le fait que le revêtement contient 85 - 93% en poids de SiO₂ et 7 - 15% en poids de TiO₂.
